(19) **Europäisches Patentamt**
**European Patent Office**
**Office européen des brevets**

(11) **EP 3 361 776 A1**

(12) **EUROPEAN PATENT APPLICATION**
published in accordance with Art. 153(4) EPC

(43) Date of publication:
**15.08.2018 Bulletin 2018/33**

(51) Int Cl.:
***H04W 36/00*** *(2009.01)*

(21) Application number: **15908000.1**

(86) International application number:
**PCT/CN2015/094118**

(22) Date of filing: **09.11.2015**

(87) International publication number:
**WO 2017/079870 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **MIAO, Jinhua**
 **Shenzhen**
 **Guangdong518129 (CN)**
• **QUAN, Wei**
 **Shenzhen**
 **Guangdong 518129 (CN)**

• **LI, Bingzhao**
 **Shenzhen**
 **Guangdong 518129 (CN)**
• **ZHANG, Jian**
 **Shenzhen**
 **Guangdong 518129 (CN)**
• **ZENG, Qinghai**
 **Shenzhen**
 **Guangdong 518129 (CN)**
• **YANG, Xiaodong**
 **Shenzhen**
 **Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **TRANSMISSION TIME INTERVAL SWITCHING METHOD, COMMUNICATION SYSTEM, USER EQUIPMENT AND EVOLVED NODE B**

(57) Embodiments of the present invention provide a method and a communications system for switching a transmission time interval, user equipment, and an evolved NodeB. User equipment UE calculates a TTI switching characteristic parameter, and the UE sends a TTI switching request message if the TTI switching characteristic parameter meets a switching condition; an evolved NodeB eNB sends, to the UE, a TTI switching indication message that includes indication information of a second TTI; and the UE performs transmission by using the second TTI. By using the method for switching a TTI, the UE, and the eNB that are provided in the embodiments of the present invention, a TTI used for transmission can be adjusted in time according to a channel quality change of the UE, thereby remarkably shortening a service delay.

FIG. 1

**Description**

**TECHNICAL FIELD**

Embodiments of the present invention relate to mobile communications technologies, and in particular, to a method and a communications system for switching a transmission time interval (Transmission Time Interval, TTI for short), user equipment (User Equipment, UE for short), and an evolved NodeB (eNodeB, eNB for short).

**BACKGROUND**

As a Long Term Evolution (Long Term Evolution, LTE for short) communications technology is popularized, users have an increasingly intense requirement for decreasing a service delay. Currently, a chip processing capability is gradually enhanced, so that a TTI length can be shortened to 1/2 of an original TTI length and even to a length of one symbol.

Considering the requirement of the users for decreasing the delay and a latest chip processing capability, if the TTI length can be flexibly adjusted according to a surrounding transmission condition change of UE, the service delay can be remarkably shortened. For example, when the UE uses a relatively long TTI and has good channel quality, if the TTI of the UE can be shortened, the service delay can be shortened. When the UE uses a relatively short TTI and the UE is located at a cell edge, if the TTI of the UE can be lengthened, the service delay can be shortened.

In an existing LTE transmission mechanism, a TTI can be set to only one fixed length. Therefore, a method for switching a TTI is needed to flexibly adjust a TTI of UE.

**SUMMARY**

An aspect of embodiments of the present invention provides a method for switching a TTI, to overcome a prior-art defect and flexibly adjust a TTI of UE.

Other aspects of the embodiments of the present invention provide UE, an eNB, and a communications system for switching a TTI, to overcome a prior-art defect and flexibly adjust a TTI of UE.

According to a first aspect, an embodiment of the present invention provides a method for switching a TTI, including:

calculating, by user equipment UE, a TTI switching characteristic parameter;
if the TTI switching characteristic parameter meets a switching condition, sending, by the UE, a TTI switching request message, where the TTI switching request message is used to instruct to switch a first TTI to a second TTI; and
receiving, by the UE, a TTI switching indication message that is sent by an evolved NodeB eNB and that includes indication information of the second TTI, and performing transmission by using the second TTI.

With reference to the first aspect, in a first possible implementation of the first aspect, the TTI switching characteristic parameter includes a power headroom report PHR, a path loss, a reference signal received power RSRP, reference signal received quality RSRQ, a PHR change amount, a path loss change amount, an RSRP change amount, or an RSRQ change amount.

With reference to the first possible implementation of the first aspect, in a second possible implementation of the first aspect, if the TTI switching characteristic parameter is the PHR, the calculating a TTI switching characteristic parameter includes:

calculating the PHR by using

$$\mathrm{PH_c(i) = P_{CMAX,c}(i) - \left\{ 10\log_{10}(M_{PUSCH,c}(i)) + P_{O\_PUSCH,c} + \alpha_c \cdot PL_c + \Delta_{TF,c}(i) + f_c(i) \right\}},$$

where

i indicates a sequence number of a subframe, c indicates a sequence number of a carrier, $PH_c(i)$ indicates a power headroom report of the subframe on the carrier c, $P_{CMAX,c}(i)$ indicates a transmit power of the UE on the carrier c, $M_{PUSCH,c}(i)$ indicates a quantity of allocated frequency domain resources, $P_{O\_PUSCH,c}$ indicates an expected received power of the eNB, $\alpha_c$ indicates a path loss offset, $PL_c$ indicates a path loss value on a current carrier, $\Delta_{TF,c}(i)$ indicates a modulation and coding scheme MCS offset in the subframe, and $f_c(i)$ indicates a power control parameter for notifying a transmit power control TPC command word; and

$M_{PUSCH,c}(i)$ and $\Delta_{TF,c}(i)$ are configured by the eNB by using radio resource control RRC signaling, a Media Access Control MAC control element, or physical layer PHY signaling.

With reference to the first aspect, or the first or the second possible implementation of the first aspect, in a third possible implementation of the first aspect, the switching condition is configured by the eNB by using RRC signaling, MAC signaling, or PHY signaling; or
the switching condition is preconfigured.

With reference to any one of the first aspect, or the first to the third possible implementations of the first aspect, in a fourth possible implementation of the first aspect, the sending, by the UE, a TTI switching request message includes:

sending, by the UE, the TTI switching request message to the eNB by using RRC signaling; or
sending, by the UE, the Media Access Control control element to the eNB, so that the eNB triggers a regular buffer status report BSR; sending, by the UE, a BSR to the eNB, so that the eNB sends a scheduling request to the UE according to the BSR; and sending, by the UE, the TTI switching request message to the eNB according to the scheduling request.

With reference to any one of the first aspect, or the first to the fourth possible implementations of the first aspect, in a fifth possible implementation of the first aspect,
if the TTI switching characteristic parameter meets the switching condition, before the sending, by the UE, a TTI switching request message, the method further includes: determining, by the UE, the second TTI according to the TTI switching characteristic parameter; and correspondingly, the TTI switching request message includes the indication information of the second TTI; or
the TTI switching request message includes the TTI switching characteristic parameter; and correspondingly, the second TTI is determined by the eNB according to the TTI switching characteristic parameter.

According to a second aspect, an embodiment of the present invention provides a method for switching a transmission time interval TTI, including:

determining, by an evolved NodeB eNB, a TTI switching request message, where the TTI switching request message is used to instruct to switch a first TTI to a second TTI; and

sending, by the eNB to user equipment UE, a TTI switching indication message that includes indication information of the second TTI, so that the UE performs transmission by using the second TTI.

With reference to the second aspect, in a first possible implementation of the second aspect, a TTI switching characteristic parameter includes a power headroom report PHR, a path loss, a reference signal received power RSRP, reference signal received quality RSRQ, a PHR change amount, a path loss change amount, an RSRP change amount, or an RSRQ change amount.

With reference to the second aspect or the first possible implementation of the second aspect, in a second possible implementation of the second aspect, a switching condition is configured by the eNB by using radio resource control RRC signaling, Media Access Control MAC signaling, or physical layer PHY signaling; or
a switching condition is preconfigured.

With reference to the second aspect, or the first or the second possible implementation of the second aspect, in a third possible implementation of the second aspect, the determining, by an eNB, a TTI switching request message includes:

receiving, by the eNB, the TTI switching request message that is sent by the UE by using RRC signaling; or
receiving, by the eNB, a Media Access Control control element sent by the UE, triggering, by the eNB, a regular buffer status report BSR, receiving, by the eNB, a BSR sent by the UE, sending, by the eNB, a scheduling request to the UE according to the BSR, and receiving, by the eNB, the TTI switching request message that is sent by the UE according to the scheduling request.

With reference to any one of the second aspect, or the first to the third possible implementations of the second aspect, in a fourth possible implementation of the second aspect,
the TTI switching request message includes the indication information of the second TTI, and the second TTI is determined by the UE according to the TTI switching characteristic parameter; or
the TTI switching request message includes the TTI switching characteristic parameter; and correspondingly, after the receiving, by the eNB, the TTI switching request message sent by the UE, the method further includes: determining, by the eNB, the second TTI according to the TTI switching characteristic parameter.

According to a third aspect, an embodiment of the present invention provides user equipment UE, including:

a processing unit, configured to calculate a TTI switching characteristic parameter;
a sending unit, configured to: if the TTI switching characteristic parameter meets a switching condition, send a TTI switching request message, where the TTI switching request message is used to instruct to switch a first TTI to a second TTI; and
a receiving unit, configured to receive a TTI switching indication message that is sent by an evolved NodeB eNB and that includes indication information of the second TTI, where
the processing unit is further configured to control the UE to perform transmission by using the second TTI.

With reference to the third aspect, in a first possible implementation of the third aspect, the TTI switching characteristic parameter includes a power headroom report PHR, a path loss, a reference signal received power RSRP, reference signal received quality RSRQ, a PHR change amount, a path loss change amount, an RSRP change amount, or an RSRQ change amount.

With reference to the first possible implementation of the third aspect, in a second possible implementation of the third aspect, if the TTI switching characteristic parameter is the PHR, the processing unit is specifically configured to calculate the PHR by using $PH_c(i) = P_{CMAX,c}(i) - \{10\log_{10}(M_{PUSCH,c}(i)) + P_{O\_PUSCH,c} + \alpha_c \cdot PL_c + \Delta_{TF,c}(i) + f_c(i)\}$, where i indicates a sequence number of a subframe, c indicates a sequence number of a carrier, $PH_c(i)$ indicates a power headroom report of the subframe on the carrier c, $P_{CMAX,c}(i)$ indicates a transmit power of the UE on the carrier c, $M_{PUSCH,c}(i)$ indicates a quantity of allocated frequency domain resources, $P_{O\_PUSCH,c}$ indicates an expected received power of the eNB, $\alpha_c$ indicates a path loss offset, $PL_c$ indicates a path loss value on a current carrier, $\Delta_{TF,c}(i)$ indicates a modulation and coding scheme MCS offset in the subframe, and $f_c(i)$ indicates a power control parameter for notifying a transmit power control TPC command word; and

$M_{PUSCH,c}(i)$ and $\Delta_{TF,c}(i)$ are configured by the eNB by using radio resource control RRC signaling, a Media Access Control MAC control element, or physical layer PHY signaling.

With reference to the third aspect, or the first or the second possible implementation of the third aspect, in a third possible implementation of the third aspect, the switching condition is configured by the eNB by using RRC signaling, MAC signaling, or PHY signaling; or
the switching condition is preconfigured.

With reference to any one of the third aspect, or the first to the third possible implementations of the third aspect, in a fourth possible implementation of the third aspect, the sending unit is specifically configured to send the TTI switching request message to the eNB by using RRC signaling; or
the sending unit is specifically configured to send the Media Access Control control element to the eNB, so that the eNB triggers a regular buffer status report BSR; the sending unit is further specifically configured to send a BSR to the eNB, so that the eNB sends a scheduling request to the UE according to the BSR; and the sending unit is further specifically configured to send the TTI switching request message to the eNB according to the scheduling request.

With reference to any one of the third aspect, or the first to the fourth possible implementations of the third aspect, in a fifth possible implementation of the third aspect,
the UE further includes: a processing unit, configured to determine the second TTI according to the TTI switching characteristic parameter; and correspondingly, the TTI switching request message includes the indication information of the second TTI; or
the TTI switching request message includes the TTI switching characteristic parameter; and correspondingly, the second TTI is determined by the eNB according to the TTI switching characteristic parameter.

According to a fourth aspect, an embodiment of the present invention provides an evolved NodeB eNB, including:

a processing unit, configured to determine a TTI switching request message, where the TTI switching request message is used to instruct to switch a first TTI to a second TTI; and
a sending unit, configured to send, to UE, a TTI switching indication message that includes indication information of the second TTI, so that the UE performs transmission by using the second TTI.

With reference to the fourth aspect, in a first possible implementation of the fourth aspect, a TTI switching characteristic parameter includes a power headroom report PHR, a path loss, a reference signal received power RSRP, reference signal received quality RSRQ, a PHR change amount, a path loss change amount, an RSRP change amount, or an RSRQ change amount.

With reference to the fourth aspect or the first possible implementation of the fourth aspect, in a second possible implementation of the fourth aspect, a switching condition is configured by the eNB by using radio resource control RRC signaling, Media Access Control MAC signaling, or physical layer PHY signaling; or
a switching condition is preconfigured.

With reference to the fourth aspect, or the first or the second possible implementation of the fourth aspect, in a third possible implementation of the fourth aspect, the processing unit is specifically configured to receive the TTI switching request message that is sent by the UE by using RRC signaling; or

the processing unit is specifically configured to receive a Media Access Control control element sent by the UE, the sending unit is further configured to trigger a regular buffer status report BSR, the processing unit is further specifically configured to receive a BSR sent by the UE, the sending unit is further configured to send a scheduling request to the UE according to the BSR, and the processing unit is further specifically configured to receive the TTI switching request message that is sent by the UE according to the scheduling request.

With reference to any one of the fourth aspect, or the first to the third possible implementations of the fourth aspect, in a fourth possible implementation of the fourth aspect,

the TTI switching request message includes the indication information of the second TTI, and the second TTI is determined by the UE according to the TTI switching characteristic parameter; or

the TTI switching request message includes the TTI switching characteristic parameter; and correspondingly, the eNB further includes a processing unit, configured to determine the second TTI according to the TTI switching characteristic parameter.

According to a fifth aspect, an embodiment of the present invention provides a communications system for switching a TTI, including:

the UE according to any one of the third aspect, or the first to the fourth possible implementations of the third aspect, and the eNB according to any one of the fourth aspect, or the first to the fourth possible implementations of the fourth aspect.

According to the method and the communications system for switching a TTI, the UE, and the eNB that are provided in the present invention, the UE calculates the TTI switching characteristic parameter, and the UE sends the TTI switching request message if the TTI switching characteristic parameter meets the switching condition; and the eNB sends the TTI switching indication message to the UE. In this way, the UE can adjust, in time according to a channel quality change, a TTI length used for transmission, so that a service delay can be remarkably shortened.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of a method for switching a TTI according to Embodiment 1 of the present invention;
FIG. 2 is a flowchart of a method for switching a TTI according to Embodiment 2 of the present invention;
FIG. 3 is a flowchart of a method for switching a TTI according to Embodiment 3 of the present invention;
FIG. 4 is a flowchart of a method for switching a TTI according to Embodiment 4 of the present invention;
FIG. 5 is a schematic structural diagram of UE according to Embodiment 5 of the present invention;
FIG. 6 is a schematic structural diagram of an eNB according to Embodiment 6 of the present invention; and
FIG. 7 is a schematic structural diagram of a communications system for switching a TTI according to Embodiment 7 of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

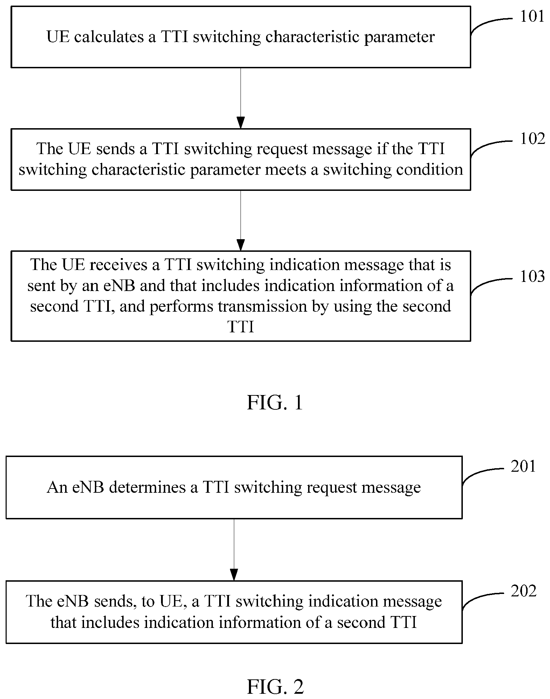

FIG. 1 is a flowchart of a method for switching a TTI according to Embodiment 1 of the present invention. As shown in FIG. 1, the method includes the following steps.

Step 101: UE calculates a TTI switching characteristic parameter.

Step 102: The UE sends a TTI switching request message if the TTI switching characteristic parameter meets a switching condition.

The TTI switching request message is used to instruct to switch a first TTI to a second TTI. The first TTI is a currently used TTI.

Step 103: The UE receives a TTI switching indication message that is sent by an eNB and that includes indication information of a second TTI, and performs transmission by using the second TTI.

In Embodiment 1 of the present invention, after calculating the TTI switching characteristic parameter, the UE sends the TTI switching request message if the TTI switching characteristic parameter meets the switching condition, so that the eNB sends the TTI switching indication message to the UE. In this way, the UE can adjust, in time according to a channel quality change, a TTI length used for transmission. For example, if channel quality of the UE increases, a TTI of the UE may be shortened; if channel quality of the UE decreases, for example, if the UE is located at a cell edge, a TTI of the UE may be lengthened. This can remarkably shorten a service delay.

FIG. 2 is a flowchart of a method for switching a TTI according to Embodiment 2 of the present invention. As shown in FIG. 2, the method includes the following steps.

Step 201: An eNB determines a TTI switching request message.

In this step, the TTI switching request message is used to instruct to switch a first TTI to a second TTI. The first TTI is a currently used TTI.

Step 202: The eNB sends, to UE, a TTI switching indication message that includes indication information of a second TTI.

In this step, the eNB sends, to the UE, the TTI switching indication message that includes the indication information of the second TTI, so that the UE performs transmission by using the second TTI.

In Embodiment 2 of the present invention, the eNB receives the TTI switching request message that is sent by the UE if a calculated TTI switching characteristic parameter meets a switching condition, and the eNB sends the TTI switching indication message to the UE. In this way, the UE can adjust, in time according to a channel quality change, a TTI used for transmission. For example, if channel quality of the UE increases, the TTI of the UE may be shortened; if channel quality of the UE decreases, for example, if the UE is located at a cell edge, the TTI of the UE may be lengthened. This can remarkably shorten a service delay.

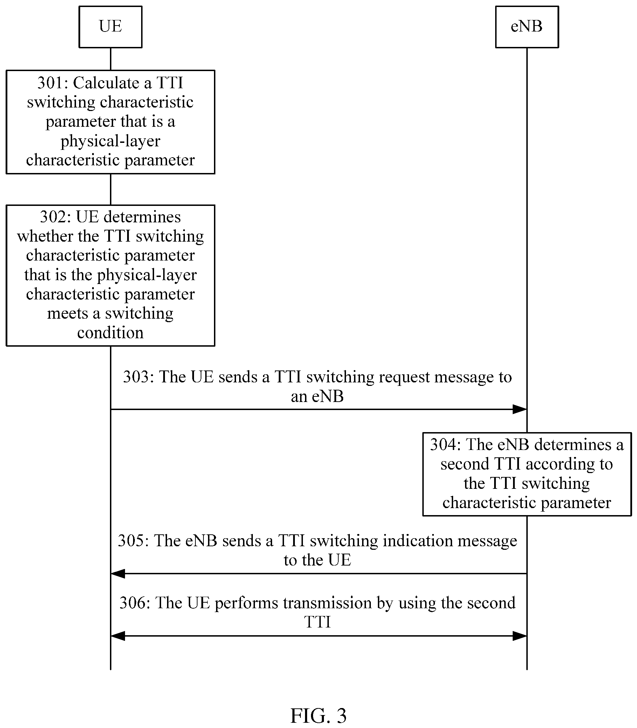

FIG. 3 is a flowchart of a method for switching a TTI according to Embodiment 3 of the present invention. As shown in FIG. 3, the method includes the following steps.

Step 301: UE calculates a TTI switching characteristic parameter.

In this step, the TTI switching characteristic parameter may be a physical-layer characteristic parameter, for example, may be any one of the following physical-layer characteristic parameters: a power headroom report (Power Headroom Reporting, PHR for short), a path loss, a reference signal received power (Reference Signal Receiving Power, RSRP for short), reference signal received quality (Reference Signal Receiving Quality, RSRQ for short), a PHR change amount, a path loss change amount, an RSRP change amount, or an RSRQ change amount.

Specifically, in this embodiment of the present invention, only three specific methods used by the UE to calculate the TTI switching characteristic parameter are described. Alternatively, the UE may calculate the TTI switching characteristic parameter by using any existing calculation method.

Method 1: The TTI switching characteristic parameter is calculated by using

$$F_n = (1-a) \cdot F_{n-1} + a \cdot M_n .$$

$M_n$ indicates a measured value that is of the TTI switching characteristic parameter and that is obtained at an $n^{th}$ time from a physical layer, n indicates a quantity of times, $F_n$ indicates the TTI switching characteristic parameter obtained through calculation, $F_0$ is set to $M_1$, and a is a filtering coefficient. In method 1, the TTI switching characteristic parameter may be the PHR, the path loss, the RSRP, the RSRQ, the PHR change amount, the path loss change amount, the RSRP change amount, or the RSRQ change amount.

Method 2: The TTI switching characteristic parameter is calculated a plurality of times by using method 1, and an average value of a plurality of calculation results is used as a TTI switching characteristic parameter that is finally obtained through calculation. In method 2, the TTI switching characteristic parameter may be the PHR, the path loss, the RSRP, the RSRQ, the PHR change amount, the path loss change amount, the RSRP change amount, or the RSRQ change amount.

Method 3: In method 3, the TTI switching characteristic parameter includes only the PHR; and correspondingly, a calculation method is: calculating the PHR by using

$$PH_c(i) = P_{CMAX,c}(i) - \left\{ 10\log_{10}(M_{PUSCH,c}(i)) + P_{O\_PUSCH,c} + \alpha_c \cdot PL_c + \Delta_{TF,c}(i) + f_c(i) \right\} ,$$

where

i indicates a sequence number of a subframe, c indicates a sequence number of a carrier, $PH_c(i)$ indicates a power headroom report of the subframe on the carrier c, $P_{CMAX,c}(i)$ indicates a transmit power of the UE on the carrier c, $M_{PUSCH,c}(i)$ indicates a quantity of allocated frequency domain resources, $P_{O\_PUSCH,c}$ indicates an expected received power of the eNB, $\alpha_c$ indicates a path loss offset, $PL_c$ indicates a path loss value on a current carrier, $\Delta_{TF,c}(i)$ indicates a modulation and coding scheme MCS offset in the subframe, and $f_c(i)$ indicates a power control parameter for notifying a transmit power control TPC command word; and

$M_{PUSCH,c}(i)$ and $\Delta_{TF,c}(i)$ are configured by the eNB by using radio resource control (Radio Resource Control, RRC for short) signaling, a media access control (Media Access Control, MAC for short) control element, or physical layer (Physical Layer, PHY for short) signaling.

Step 302: The UE determines whether the TTI switching characteristic parameter meets a switching condition; and if the TTI switching characteristic parameter meets the switching condition, performs step 303, or if the TTI switching characteristic parameter does not meet the switching condition, returns to step 301.

In this step, the switching condition may be configured by the eNB by using RRC signaling, MAC signaling, or PHY signaling; or the switching condition may be preconfigured.

Specifically, the switching condition may be: a PHR, a path loss, an RSRP, or RSRQ that is obtained through calculation is less than a first threshold; or a PHR change amount, a path loss change amount, an RSRP change amount, or an RSRQ change amount that is obtained through calculation is greater than a second threshold.

Step 303: The UE sends a TTI switching request message to an eNB.

In this step, the TTI switching request message is used to instruct to switch a first TTI to a second TTI, and includes at least the TTI switching characteristic parameter. Further, the TTI switching request message may further include any one or more of the following information: a length of the first TTI, duration of the second TTI, a continuous cycle of the second TTI, or a modulation and coding scheme (Modulation and Coding Scheme, MCS for short) of the UE.

Specifically, the step of sending, by the UE, a TTI switching request message to an eNB may be specifically performed by using the following method 1: sending, by the UE, the TTI switching request message to the eNB by using RRC signaling. Alternatively, the step of sending, by the UE, a TTI switching request message to an eNB may be specifically performed by using the following method 2: sending, by the UE, a Media Access Control control element (MAC CE for short) to the eNB, so that the eNB triggers a regular buffer status report (Buffer Status Report, BSR for short) according to the MAC CE; after the eNB triggers a BSR, sending, by the UE, the BSR to the eNB, so that the eNB sends a scheduling request to the UE according to the BSR; and sending, by the UE, the TTI switching request message to the eNB according to the scheduling request. The MAC CE may be specifically a plurality of MAC CEs, for example, may be a power headroom report (PHR for short) MAC CE.

Step 304: The eNB determines a second TTI according to the TTI switching characteristic parameter.

In this step, the eNB determines the second TTI according to the TTI switching characteristic parameter. Specifically, the eNB determines current channel quality of the UE according to the TTI switching characteristic parameter. If the current channel quality of the UE increases, a current TTI is shortened, and a shortened TTI is determined as the second TTI; if the current channel quality of the UE decreases, a current TTI is prolonged, and a prolonged TTI is determined as the second TTI. In a specific implementation process, the following method 1 may be used: A plurality of candidate TTIs are preset in the eNB, the first TTI that is currently used is one of the plurality of candidate TTIs, and the eNB selects the second TTI from the plurality of candidate TTIs according to a shortening or prolonging requirement. Alternatively, in a specific implementation process, the following method 2 may be used: Both the eNB and the UE store two candidate TTIs, that is, the first TTI and the second TTI, where the currently used TTI is the first TTI; and the eNB determines to switch to the second TTI when the second TTI meets a shortening or prolonging requirement.

Step 305: The eNB sends a TTI switching indication message to the UE.

In this step, the TTI switching indication message includes indication information of the second TTI. If method 1 is used in step 304, in step 305, the indication information of the second TTI is a length of the second TTI; if method 2 is used in step 304, in step 305, the indication information of the second TTI is a TTI switching indication. Specifically, the eNB may send the TTI switching indication message to the UE by using RRC signaling, a MAC control element, or PHY signaling.

Step 306: The UE performs transmission by using the second TTI.

In Embodiment 3 of the present invention, the eNB receives the TTI switching request message that is sent by the UE if the calculated TTI switching characteristic parameter meets the switching condition, and the eNB determines the second TTI according to the TTI switching characteristic parameter and sends the TTI switching indication message to the UE. In this way, the UE can adjust, in time according to a channel quality change, a TTI used for transmission. For example, if channel quality of the UE increases, the TTI of the UE may be shortened; if channel quality of the UE decreases, for example, if the UE is located at a cell edge, the TTI of the UE may be lengthened. This can remarkably shorten a service delay.

In addition, the TTI switching characteristic parameter includes the PHR, the path loss, the RSRP, the RSRQ, the PHR change amount, the path loss change amount, the RSRP change amount, or the RSRQ change amount. The switching condition may be configured by the eNB or may be preconfigured. The UE may send the TTI switching request message to the eNB by using the RRC signaling or the MAC control element. Therefore, the method for switching a TTI in this embodiment is used more flexibly, so that the method for switching a TTI in this embodiment may be used in more diversified communications systems to shorten the service delay.

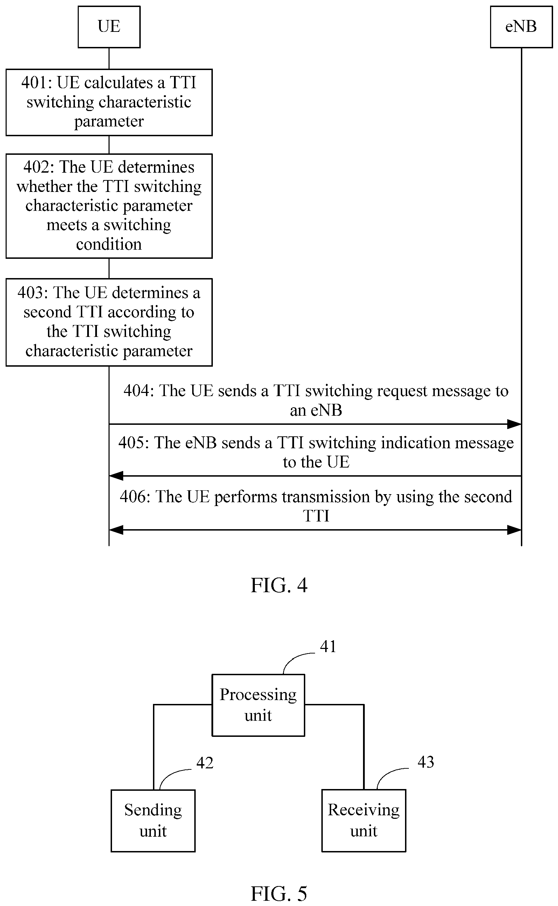

FIG. 4 is a flowchart of a method for switching a TTI according to Embodiment 4 of the present invention. As shown in FIG. 4, the method includes the following steps.

Step 401: UE calculates a TTI switching characteristic parameter.

In this step, a specific method used by the UE to calculate the TTI switching characteristic parameter is the same as that recorded in step 301. Details are not described herein again.

Step 402: The UE determines whether the TTI switching characteristic parameter meets a switching condition; and if the TTI switching characteristic parameter meets the switching condition, performs step 403, or if the TTI switching characteristic parameter does not meet the switching condition, returns to step 401.

In this step, a configuration method of the switching condition and specific content of the switching condition are the same as those recorded in step 302. Details are not described herein again.

Step 403: The UE determines a second TTI according to the TTI switching characteristic parameter.

In this step, the UE determines the second TTI according to the TTI switching characteristic parameter. Specifically, the UE determines current channel quality of the UE according to the TTI switching characteristic parameter. If the current channel quality of the UE increases, a current TTI is shortened, and a shortened TTI is determined as the second TTI; if the current channel quality of the UE decreases, a current TTI is prolonged, and a prolonged TTI is determined as the second TTI. In a specific implementation process, the following method 1 may be used: A plurality of candidate TTIs are preset in the UE, a first TTI that is currently used is one of the plurality of candidate TTIs, and the UE selects the second TTI from the plurality of candidate TTIs according to a shortening or prolonging requirement. Alternatively, in a specific implementation process, the following method 2 may be used: Both the eNB and the UE store two candidate TTIs, that is, a first TTI and the second TTI, where the currently used TTI is the first TTI; and the UE determines to switch to the second TTI when the second TTI meets a shortening or prolonging requirement.

Step 404: The UE sends a TTI switching request message to an eNB.

In this step, the TTI switching request message is used to instruct to switch the first TTI to the second TTI, and includes at least indication information of the second TTI. If method 1 is used in step 403, in step 404, the indication information of the second TTI is a length of the second TTI; if method 2 is used in step 403, in step 404, the indication information of the second TTI is a TTI switching indication.

Information that may be further included in the TTI switching request message is the same as that recorded in step 303. Details are not described herein again. A specific method used for the step of sending, by the UE, a TTI switching request message to an eNB is the same as that recorded in step 303. Details are not described herein again.

Step 405: The eNB sends a TTI switching indication message to the UE.

In this step, the TTI switching indication message includes the indication information of the second TTI. If method 1 is used in step 403, in step 405, the indication information of the second TTI is the length of the second TTI; if method 2 is used in step 403, in step 405, the indication information of the second TTI is the TTI switching indication. A specific method used by the eNB to send the TTI switching indication message to the UE is the same as that recorded in step 305. Details are not described herein again.

Step 406: The UE performs transmission by using the second TTI.

In Embodiment 4 of the present invention, the UE determines the second TTI if the calculated TTI switching characteristic parameter meets the switching condition, and sends the TTI switching request message to the eNB; and the eNB sends the TTI switching indication message to the UE. In this way, the UE can adjust, in time according to a channel quality change, a TTI used for transmission. For example, if channel quality of the UE increases, the TTI of the UE may be shortened; if channel quality of the UE decreases, for example, if the UE is located at a cell edge, the TTI of the UE may be lengthened. This can remarkably shorten a service delay.

In addition, the TTI switching characteristic parameter includes a PHR, a path loss, an RSRP, RSRQ, a PHR change amount, a path loss change amount, an RSRP change amount, or an RSRQ change amount. The switching condition may be configured by the eNB or may be preconfigured. The UE may send the TTI switching request message to the eNB by using RRC signaling or a MAC control element. Therefore, the method for switching a TTI in this embodiment is used more flexibly, so that the method for switching a TTI in this embodiment may be used in more diversified communications systems to shorten the service delay.

FIG. 5 is a schematic structural diagram of UE according to Embodiment 5 of the present invention. As shown in FIG. 5, the UE includes at least a processing unit 41, a sending unit 42, and a receiving unit 43.

The processing unit 41 is configured to calculate a TTI switching characteristic parameter. The sending unit 42 is configured to: if the TTI switching characteristic parameter meets a switching condition, send a TTI switching request message, where the TTI switching request message is used to instruct to switch a first TTI to a second TTI. The receiving unit 43 is configured to receive a TTI switching indication message that is sent by an eNB and that includes indication information of the second TTI. The processing unit 44 is further configured to control the UE to perform transmission by using the second TTI.

In Embodiment 5 of the present invention, after the processing unit 41 of the UE calculates the TTI switching characteristic parameter, the sending unit 42 of the UE sends the TTI switching request message if the TTI switching characteristic parameter meets the switching condition; and the receiving unit 43 of the UE receives the TTI switching indication message that is sent by the eNB and that includes the indication information of the second TTI. In this way, the UE can adjust, in time according to a channel quality change, a TTI used for transmission. For example, if channel quality of the UE increases, the TTI of the UE may be shortened; if channel quality of the UE decreases, for example, if the UE is located at a cell edge, the TTI of the UE may be lengthened. This can remarkably shorten a service delay.

Based on the foregoing technical solution, the TTI switching characteristic parameter includes a power headroom report PHR, a path loss, a reference signal received power RSRP, reference signal received quality RSRQ, a PHR change amount, a path loss change amount, an RSRP change amount, or an RSRQ change amount.

Based on the foregoing technical solution, if the TTI switching characteristic parameter is the PHR, the processing unit 41 is specifically configured to calculate the PHR by using

$$PH_c(i) = P_{CMAX,c}(i) - \left\{ 10\log_{10}(M_{PUSCH,c}(i)) + P_{O\_PUSCH,c} + \alpha_c \cdot PL_c + \Delta_{TF,c}(i) + f_c(i) \right\},$$

where

i indicates a sequence number of a subframe, c indicates a sequence number of a carrier, $PH_c(i)$ indicates a power headroom report of the subframe on the carrier c, $P_{CMAX,c}(i)$ indicates a transmit power of the UE on the carrier c, $M_{PUSCH,c}(i)$ indicates a quantity of allocated frequency domain resources, $P_{O\_PUSCH,c}$ indicates an expected received power of the eNB, $\alpha_c$ indicates a path loss offset, $PL_c$ indicates a path loss value on a current carrier, $\Delta_{TF,c}(i)$ indicates a modulation and coding scheme MCS offset in the subframe, and $f_c(i)$ indicates a power control parameter for notifying a transmit power control TPC command word; and $M_{PUSCH,c}(i)$ and $\Delta_{TF,c}(i)$ are configured by the eNB by using radio resource control RRC signaling, a Media Access Control MAC control element, or physical layer PHY signaling.

Based on the foregoing technical solution, the switching condition is configured by the eNB by using RRC signaling, MAC signaling, or PHY signaling; or the switching condition is preconfigured.

Based on the foregoing technical solution, the sending unit 42 is specifically configured to send the TTI switching request message to the eNB by using RRC signaling. Alternatively, the sending unit 42 is specifically configured to send the Media Access Control control element to the eNB, so that the eNB triggers a regular buffer status report BSR; the sending unit 42 is further specifically configured to send a BSR to the eNB, so that the eNB sends a scheduling request to the UE according to the BSR; and the sending unit 42 is further specifically configured to send the TTI switching request message to the eNB according to the scheduling request.

Based on the foregoing technical solution, the processing unit is further configured to determine the second TTI according to the TTI switching characteristic parameter; and correspondingly, the TTI switching request message includes the indication information of the second TTI.

Alternatively, the TTI switching request message includes the TTI switching characteristic parameter; and correspondingly, the second TTI is determined by the eNB according to the TTI switching characteristic parameter.

The UE in Embodiment 5 of the present invention may be configured to execute the methods for switching a TTI in Embodiment 1 to Embodiment 4 of the present invention. For a specific execution manner, refer to descriptions of Embodiment 1 to Embodiment 4 of the present invention.

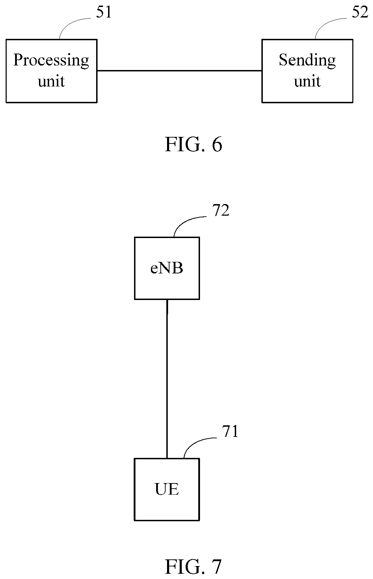

FIG. 6 is a schematic structural diagram of an eNB according to Embodiment 6 of the present invention. As shown in FIG. 6, the eNB includes at least a processing unit 51 and a sending unit 52.

The processing unit 51 is configured to determine a TTI switching request message, where the TTI switching request message is used to instruct to switch a first TTI to a second TTI. The sending unit 52 is configured to send, to UE, a TTI switching indication message that includes indication information of the second TTI, so that the UE performs transmission by using the second TTI.

In Embodiment 6 of the present invention, the processing unit 51 of the eNB determines the TTI switching request message, and the sending unit 52 of the eNB sends the TTI switching indication message to the UE. In this way, the UE can adjust, in time according to a channel quality change, a TTI used for transmission. For example, if channel quality of the UE increases, the TTI of the UE may be shortened; if channel quality of the UE decreases, for example, if the UE is located at a cell edge, the TTI of the UE may be lengthened. This can remarkably shorten a service delay.

Based on the foregoing technical solution, a TTI switching characteristic parameter includes a PHR, a path loss, an RSRP, RSRQ, a PHR change amount, a path loss change amount, an RSRP change amount, or an RSRQ change amount.

Based on the foregoing technical solution, a switching condition is configured by the eNB by using radio resource control RRC signaling, Media Access Control MAC signaling, or physical layer PHY signaling; or a switching condition is preconfigured.

Based on the foregoing technical solution, the processing unit 51 is specifically configured to receive the TTI switching request message that is sent by the UE by using RRC signaling. Alternatively, the processing unit 51 is specifically configured to receive a Media Access Control control element sent by the UE, the sending unit 52 is further configured to trigger a regular buffer status report BSR, the processing unit 51 is further specifically configured to receive a BSR sent by the UE, the sending unit 52 is further configured to send a scheduling request to the UE according to the BSR, and the processing unit 51 is further specifically configured to receive the TTI switching request message that is sent by the UE according to the scheduling request.

Based on the foregoing technical solution, the TTI switching request message includes the indication information of the second TTI, and the second TTI is determined by the UE according to the TTI switching characteristic parameter.

Alternatively, the TTI switching request message includes the TTI switching characteristic parameter; and correspondingly, the eNB may further include a processing unit. The processing unit is connected to the processing unit 51 and the sending unit 52, and is configured to determine the second TTI according to the TTI switching characteristic parameter.

The eNB in Embodiment 6 of the present invention may be configured to execute the methods for switching a TTI in Embodiment 1 to Embodiment 4 of the present invention. For a specific execution manner, refer to descriptions of Embodiment 1 to Embodiment 4 of the present invention.

FIG. 7 is a schematic structural diagram of a communications system for switching a TTI according to Embodiment 7 of the present invention. As shown in FIG. 7, the communications system for switching a TTI includes at least UE 71 and an eNB 72.

A composition structure and a function of the UE 71 are shown in Embodiment 5 of the present invention. The UE 71 may execute the methods for switching a TTI in Embodiment 1 to Embodiment 4 of the present invention. A composition structure and a function of the eNB 72 are shown in Embodiment 6 of the present invention. The eNB 72 may execute the methods for switching a TTI in Embodiment 1 to Embodiment 4 of the present invention.

It should be noted that, for ease of description, the foregoing method embodiments are described as a combination of a series of actions. However, persons skilled in the art should understand that the present invention is not limited to the described sequence of the actions, because some steps may be performed in another sequence or performed at the same time according to the present invention. In addition, persons skilled in the art should also appreciate that all the embodiments described in the specification are embodiments as an example, and the related actions and modules are not necessarily mandatory to the present invention.

In the foregoing embodiments, the descriptions of the embodiments have respective focuses. For a part that is not described in detail in an embodiment, reference may be made to related descriptions in other embodiments.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the spirit and scope of the technical solutions of the embodiments of the present invention.

**Claims**

1. A method for switching a transmission time interval TTI, comprising:

   calculating, by user equipment UE, a TTI switching characteristic parameter;
   if the TTI switching characteristic parameter meets a switching condition, sending, by the UE, a TTI switching request message, wherein the TTI switching request message is used to instruct to switch a first TTI to a second TTI; and

receiving, by the UE, a TTI switching indication message that is sent by an evolved NodeB eNB and that comprises indication information of the second TTI, and performing transmission by using the second TTI.

2. The method according to claim 1, wherein
the TTI switching characteristic parameter comprises a power headroom report PHR, a path loss, a reference signal received power RSRP, reference signal received quality RSRQ, a PHR change amount, a path loss change amount, an RSRP change amount, or an RSRQ change amount.

3. The method according to claim 2, wherein when the TTI switching characteristic parameter is the PHR, the calculating a TTI switching characteristic parameter comprises:
calculating the PHR by using

$$\mathrm{PH_c(i) = P_{CMAX,c}(i) - \Big\{ 10\log_{10}(M_{PUSCH,c}(i)) + P_{O\_PUSCH,c} + \alpha_c \cdot PL_c + \Delta_{TF,c}(i) + f_c(i) \Big\} },$$

wherein

i indicates a sequence number of a subframe, c indicates a sequence number of a carrier, $PH_c(i)$ indicates a power headroom report of the subframe on the carrier c, $P_{CMAX,c}(i)$ indicates a transmit power of the UE on the carrier c, $M_{PUSCH,c}(i)$ indicates a quantity of allocated frequency domain resources, $P_{O\_PUSCH,c}$ indicates an expected received power of the eNB, $\alpha_c$ indicates a path loss offset, $PL_c$ indicates a path loss value on a current carrier, $\Delta_{TF,c}(i)$ indicates a modulation and coding scheme MCS offset in the subframe, and $f_c(i)$ indicates a power control parameter for notifying a transmit power control TPC command word; and
$M_{PUSCH,c}(i)$ and $\Delta_{TF,c}(i)$ are configured by the eNB by using radio resource control RRC signaling, a media access control MAC control element, or physical layer PHY signaling.

4. The method according to any one of claims 1 to 3, wherein
the switching condition is configured by the eNB by using RRC signaling, MAC signaling, or PHY signaling; or
the switching condition is preconfigured.

5. The method according to any one of claims 1 to 4, wherein the sending, by the UE, a TTI switching request message comprises:

sending, by the UE, the TTI switching request message to the eNB by using RRC signaling; or
sending, by the UE, a media access control control element to the eNB, so that the eNB triggers a regular buffer status report BSR; sending, by the UE, a BSR to the eNB, so that the eNB sends a scheduling request to the UE according to the BSR; and sending, by the UE, the TTI switching request message to the eNB according to the scheduling request.

6. The method according to any one of claims 1 to 5, wherein
if the TTI switching characteristic parameter meets the switching condition, before the sending, by the UE, a TTI switching request message, the method further comprises: determining, by the UE, the second TTI according to the TTI switching characteristic parameter; and correspondingly, the TTI switching request message comprises the indication information of the second TTI; or
the TTI switching request message comprises the TTI switching characteristic parameter; and correspondingly, the second TTI is determined by the eNB according to the TTI switching characteristic parameter.

7. A method for switching a transmission time interval TTI, comprising:

determining, by an evolved NodeB eNB, a TTI switching request message, wherein the TTI switching request message is used to instruct to switch a first TTI to a second TTI; and
sending, by the eNB to user equipment UE, a TTI switching indication message that comprises indication information of the second TTI, so that the UE performs transmission by using the second TTI.

8. The method according to claim 7, wherein
a TTI switching characteristic parameter comprises a power headroom report PHR, a path loss, a reference signal received power RSRP, reference signal received quality RSRQ, a PHR change amount, a path loss change amount, an RSRP change amount, or an RSRQ change amount.

9. The method according to claim 7 or 8, wherein
   a switching condition is configured by the eNB by using radio resource control RRC signaling, media access control MAC signaling, or physical layer PHY signaling; or
   a switching condition is preconfigured.

10. The method according to any one of claims 7 to 9, wherein the determining, by an eNB, a TTI switching request message comprises:

    receiving, by the eNB, the TTI switching request message that is sent by the UE by using RRC signaling; or receiving, by the eNB, a media access control control element sent by the UE, triggering, by the eNB, a regular buffer status report BSR, receiving, by the eNB, a BSR sent by the UE, sending, by the eNB, a scheduling request to the UE according to the BSR, and receiving, by the eNB, the TTI switching request message that is sent by the UE according to the scheduling request.

11. The method according to any one of claims 7 to 10, wherein
    the TTI switching request message comprises the indication information of the second TTI, and the second TTI is determined by the UE according to the TTI switching characteristic parameter; or
    the TTI switching request message comprises the TTI switching characteristic parameter; and correspondingly, after the receiving, by the eNB, the TTI switching request message sent by the UE, the method further comprises: determining, by the eNB, the second TTI according to the TTI switching characteristic parameter.

12. User equipment UE, comprising:

    a processing unit, configured to calculate a TTI switching characteristic parameter;
    a sending unit, configured to: if the TTI switching characteristic parameter meets a switching condition, send a TTI switching request message, wherein the TTI switching request message is used to instruct to switch a first TTI to a second TTI; and
    a receiving unit, configured to receive a TTI switching indication message that is sent by an evolved NodeB eNB and that comprises indication information of the second TTI, wherein
    the processing unit is further configured to control the UE to perform transmission by using the second TTI.

13. The UE according to claim 12, wherein
    the TTI switching characteristic parameter comprises a power headroom report PHR, a path loss, a reference signal received power RSRP, reference signal received quality RSRQ, a PHR change amount, a path loss change amount, an RSRP change amount, or an RSRQ change amount.

14. The method according to claim 13, wherein if the TTI switching characteristic parameter is the PHR, the processing unit is specifically configured to calculate the PHR by using

$$\mathrm{PH_c}(i) = \mathrm{P_{CMAX,c}}(i) - \left\{ 10\log_{10}(\mathrm{M_{PUSCH,c}}(i)) + \mathrm{P_{O\_PUSCH,c}} + \alpha_c \cdot \mathrm{PL_c} + \Delta_{\mathrm{TF,c}}(i) + \mathrm{f_c}(i) \right\} \quad,$$

wherein

    i indicates a sequence number of a subframe, c indicates a sequence number of a carrier, $\mathrm{PH_c}(i)$ indicates a power headroom report of the subframe on the carrier c, $\mathrm{P_{CMAX,c}}(i)$ indicates a transmit power of the UE on the carrier c, $\mathrm{M_{PUSCH,c}}(i)$ indicates a quantity of allocated frequency domain resources, $\mathrm{P_{O\_PUSCH,c}}$ indicates an expected received power of the eNB, $\alpha_c$ indicates a path loss offset, $\mathrm{PL_c}$ indicates a path loss value on a current carrier, $\Delta_{\mathrm{TF,c}}(i)$ indicates a modulation and coding scheme MCS offset in the subframe, and $\mathrm{f_c}(i)$ indicates a power control parameter for notifying a transmit power control TPC command word; and
    $\mathrm{M_{PUSCH,c}}(i)$ and $\Delta_{\mathrm{TF,c}}(i)$ are configured by the eNB by using radio resource control RRC signaling, a Media Access Control MAC control element, or physical layer PHY signaling.

15. The UE according to any one of claims 12 to 14, wherein
    the switching condition is configured by the eNB by using RRC signaling, MAC signaling, or PHY signaling; or

the switching condition is preconfigured.

16. The UE according to any one of claims 12 to 15, wherein
the sending unit is specifically configured to send the TTI switching request message to the eNB by using RRC signaling; or
the sending unit is specifically configured to send a media access control control element to the eNB, so that the eNB triggers a regular buffer status report BSR; the sending unit is further specifically configured to send a BSR to the eNB, so that the eNB sends a scheduling request to the UE according to the BSR; and the sending unit is further specifically configured to send the TTI switching request message to the eNB according to the scheduling request.

17. The UE according to any one of claims 12 to 16, wherein
the processing unit is further configured to determine the second TTI according to the TTI switching characteristic parameter; and correspondingly, the TTI switching request message comprises the indication information of the second TTI; or
the TTI switching request message comprises the TTI switching characteristic parameter; and correspondingly, the second TTI is determined by the eNB according to the TTI switching characteristic parameter.

18. An evolved NodeB eNB, comprising:

a processing unit, configured to determine a TTI switching request message, wherein the TTI switching request message is used to instruct to switch a first TTI to a second TTI; and
a sending unit, configured to send, to user equipment UE, a TTI switching indication message that comprises indication information of the second TTI, so that the UE performs transmission by using the second TTI.

19. The eNB according to claim 18, wherein
a TTI switching characteristic parameter comprises a power headroom report PHR, a path loss, a reference signal received power RSRP, reference signal received quality RSRQ, a PHR change amount, a path loss change amount, an RSRP change amount, or an RSRQ change amount.

20. The eNB according to claim 18 or 19, wherein
a switching condition is configured by the eNB by using radio resource control RRC signaling, Media Access Control MAC signaling, or physical layer PHY signaling; or
a switching condition is preconfigured.

21. The eNB according to any one of claims 18 to 20, wherein
the processing unit is specifically configured to receive the TTI switching request message that is sent by the UE by using RRC signaling; or
the processing unit is specifically configured to receive a Media Access Control control element sent by the UE, the sending unit is further configured to trigger a regular buffer status report BSR, the processing unit is further specifically configured to receive a BSR sent by the UE, the sending unit is further configured to send a scheduling request to the UE according to the BSR, and the processing unit is further specifically configured to receive the TTI switching request message that is sent by the UE according to the scheduling request.

22. The eNB according to any one of claims 18 to 21, wherein
the TTI switching request message comprises the indication information of the second TTI, and the second TTI is determined by the UE according to the TTI switching characteristic parameter; or
the TTI switching request message comprises the TTI switching characteristic parameter; and correspondingly, the eNB further comprises: a processing unit, configured to determine the second TTI according to the TTI switching characteristic parameter.

23. A communications system for switching a transmission time interval TTI, comprising:
the UE according to any one of claims 12 to 17 and the eNB according to any one of claims 18 to 22.

| UE calculates a TTI switching characteristic parameter | 101 |

↓

| The UE sends a TTI switching request message if the TTI switching characteristic parameter meets a switching condition | 102 |

↓

| The UE receives a TTI switching indication message that is sent by an eNB and that includes indication information of a second TTI, and performs transmission by using the second TTI | 103 |

FIG. 1

| An eNB determines a TTI switching request message | 201 |

↓

| The eNB sends, to UE, a TTI switching indication message that includes indication information of a second TTI | 202 |

FIG. 2

UE

eNB

301: Calculate a TTI switching characteristic parameter that is a physical-layer characteristic parameter

302: UE determines whether the TTI switching characteristic parameter that is the physical-layer characteristic parameter meets a switching condition

303: The UE sends a TTI switching request message to an eNB

304: The eNB determines a second TTI according to the TTI switching characteristic parameter

305: The eNB sends a TTI switching indication message to the UE

306: The UE performs transmission by using the second TTI

FIG. 3

```
┌──────┐                                      ┌──────┐
│  UE  │                                      │ eNB  │
└──────┘                                      └──────┘

┌────────────────────────┐
│ 401: UE calculates a TTI│
│ switching characteristic│
│       parameter         │
└────────────────────────┘

┌────────────────────────┐
│ 402: The UE determines  │
│ whether the TTI switching│
│ characteristic parameter│
│     meets a switching   │
│        condition        │
└────────────────────────┘

┌────────────────────────┐
│ 403: The UE determines a│
│  second TTI according to│
│     the TTI switching   │
│  characteristic parameter│
└────────────────────────┘

404: The UE sends a TTI switching request message to
                    an eNB

405: The eNB sends a TTI switching indication message
                   to the UE

406: The UE performs transmission by using the second
                      TTI
```

FIG. 4

```
                    ┌── 41
              ┌────────────┐
              │ Processing │
              │    unit    │
              └────────────┘
         ┌── 42               ┌── 43
    ┌──────────┐         ┌──────────┐
    │  Sending │         │ Receiving│
    │   unit   │         │   unit   │
    └──────────┘         └──────────┘
```

FIG. 5

51

52

| Processing unit | | Sending unit |

FIG. 6

72

eNB

71

UE

FIG. 7

## INTERNATIONAL SEARCH REPORT

| International application No. |
|---|
| PCT/CN2015/094118 |

### A. CLASSIFICATION OF SUBJECT MATTER

H04W 36/00 (2009.01) i

According to International Patent Classification (IPC) or to both national classification and IPC

### B. FIELDS SEARCHED

Minimum documentation searched (classification system followed by classification symbols)

H04L; H04W; H04Q 7+

Documentation searched other than minimum documentation to the extent that such documents are included in the fields searched

Electronic data base consulted during the international search (name of data base and, where practicable, search terms used)

CPRSABS, CNTXT, VEN, CNKI, USTXT: transmission time interval, TTI, chang+, switch+, conver+, turn+, second, request+, indicat+, instruct+, message, information

### C. DOCUMENTS CONSIDERED TO BE RELEVANT

| Category* | Citation of document, with indication, where appropriate, of the relevant passages | Relevant to claim No. |
|---|---|---|
| X | WO 2014166214 A1 (HUAWEI TECHNOLOGIES CO., LTD.) 16 October 2014 (16.10.2014) description, page 3, line 14 to page 9, line 9, claims 1-25 and figure 5 | 1-23 |
| A | WO 2014000205 A1 (HUAWEI TECHNOLOGIES CO., LTD.) 03 January 2014 (03.01.2014) the whole document | 1-23 |
| A | WO 2013189833 A1 (TELEFONAKTIEBOLAGET L M ERICSSON (PUBL)) 27 December 2013 (27.12.2013) the whole document | 1-23 |
| A | WO 2010124438 A1 (HUAWEI TECHNOLOGIES CO., LTD.) 04 November 2010 (04.11.2010) the whole document | 1-23 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 July 2016 | 02 August 2016 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LV, Xiaoqian Telephone No. (86-10) 62089460 |
|---|---|

Form PCT/ISA /210 (second sheet) (July 2009)

## INTERNATIONAL SEARCH REPORT
### Information on patent family members

International application No.

PCT/CN2015/094118

| Patent Documents referred in the Report | Publication Date | Patent Family | Publication Date |
| --- | --- | --- | --- |
| WO 2014166214 A1 | 16 October 2014 | CN 104521281 A | 15 April 2015 |
| | | CN 105264950 | 26 January 2016 |
| WO 2014000205 A1 | 03 January 2014 | CN 103636177 A | 12 March 2014 |
| | | CN 103636177 B | 25 February 2015 |
| | | EP 28407 48 A1 | 25 February 2015 |
| | | JP 2015519850 A | 09 July 2015 |
| | | EP 28407 48 A4 | 27 May 2015 |
| | | US 2015110060 A1 | 23 April 2015 |
| | | IN 201402538 P2 | 27 November 2015 |
| WO 2013189833 A1 | 27 December 2013 | EP 2862325 B1 | 04 May 2016 |
| | | US 2013336135 A1 | 19 December 2013 |
| | | CN 104396202 A | 04 March 2015 |
| | | EP 2862325 A1 | 22 April 2015 |
| | | US 9300373 B2 | 29 March 2016 |
| WO 2010124438 A1 | 04 November 2010 | JP 5349683 B2 | 20 November 2013 |
| | | US 2012039294 A1 | 16 February 2012 |
| | | RU 2011148123 A | 10 June 2013 |
| | | EP 2426986 A1 | 07 March 2012 |
| | | US 8824369 B2 | 02 September 2014 |
| | | RU 2497312 C2 | 27 October 2013 |
| | | EP 2426986 A4 | 11 July 2012 |
| | | US 9007952 B2 | 14 April 2015 |
| | | JP 2012525095 A | 18 October 2012 |
| | | US 2014341195 A1 | 20 November 2014 |
| | | EP 2426986 B1 | 25 June 2014 |
| | | CN 102106171 B | 25 June 2014 |
| | | CN 102106171 A | 22 June 2011 |
| | | EP 2763462 A1 | 06 August 2014 |

Form PCT/ISA /210 (patent family annex) (July 2009)